# EUROPÄISCHE PATENTANMELDUNG

(11) **EP 3 837 972 A1**
(43) Veröffentlichungstag der Anmeldung: **23.06.2021**
(21) Anmeldenummer: 20193528.5
(22) Anmeldetag: 31.08.2020
(51) Int. Cl.: A01K 5/02, B67B 7/40, A01K 5/01

(54) **VORRICHTUNG ZUR SELBSTTÄTIGEN BEREITSTELLUNG VON NASSFUTTER FÜR HAUSTIERE**

(30) Priorität: 16.12.2019 DE 102019134550
(71) Anmelder: List, Benjamin, 72074 Tübingen (DE)
(72) Erfinder: List, Benjamin, 72074 Tübingen (DE)
(74) Vertreter: Christ, Niko

(57) **Zusammenfassung**

Es sind im Stand der Technik bereits Fütterungsautomaten bekannt, welche aufgrund bestimmter Kriterien, insbesondere aufgrund eines Zeitablaufs, Haustieren den Zugang zum Futter automatisiert ermöglichen. Diese dienen insbesondere zur Versorgung der Tiere bei längerer Abwesenheit des Besitzers. Bekannt ist hierbei, das Futter, insbesondere Nassfutter, in Portionsbehältern vorzuhalten und bei Bedarf zu öffnen. Hierzu sieht die Vorrichtung wenigstens eine Aufnahme vor, in der die Portionsbehälter gelagert werden und dann bei Bedarf geöffnet werden. Bekannte Vorrichtungen sehen hierfür eine Art Dosenöffner vor, bei dem jedoch zum Einen nur runde Behälter Einsatz finden können, zum anderen der abgetrennte Deckel automatisch ausgefördert wird und daher von dem Haustier mitgenommen werden kann. Dies ist wegen scharfer Kanten gefährlich und wegen einer möglicherweise verschmutzten Innenseite des Deckels auch unhygienisch.

Die vorliegende Erfindung schlägt einen Fütterungsautomaten vor, der eine definierte Verbringung eines abgetrennten Deckels vorsieht und daher den Stand der Technik erheblich fortentwickelt.

## Beschreibung

Die vorliegende Erfindung betrifft eine Vorrichtung zur selbsttätigen Bereitstellung von Nassfutter für Haustiere, umfassend wenigstens eine Aufnahme zur, vorzugsweise formschlüssigen, Lagerung eines Portionsbehälters mit Nassfutter sowie Mitteln zur selbsttätigen Öffnung eines in der wenigstens einen Aufnahme befindlichen Portionsbehälters.

Eine solche Vorrichtung ist bereits aus der DE 37 44 337 A1 vorbekannt. Sie sieht ein Zusammenspiel zweier Karussells vor, bei denen ein Erstes eine Mehrzahl von Flüssigkeitsbehältern, ein Zweites hingegen eine Mehrzahl von Portionsbehältern mit Futter aufweist. Über eine Zeitfunktion wird der Zeitpunkt der Bereitstellung eines neuen Portionsbehälters und eines neuen Flüssigkeitsbehälters festgelegt. Wird ein solcher Zeitpunkt erreicht, so drehen sich die Karussells um eine Drehposition weiter, wobei der jeweils nächste anstehende Behälter geöffnet wird. Die Öffnung des Behälters erfolgt nach dem Prinzip eines Dosenöffners, indem ein Messer durch den Deckel in das Innere des jeweiligen Behälters getrieben und der Behälter im Kreis gedreht wird. Der Deckel wird von einem Abweiser erfasst und über einen Schlitz im Deckel des Gehäuses über dem Karussell nach außen gefördert. Dann werden die geöffneten Behälter an eine Drehposition gebracht, an welcher ein Haustier durch eine Entnahmeöffnung auf den Inhalt der Behälter Zugriff erhält. Es versteht sich von selbst, dass die Bauform und Platzierung der Vorrichtung das Erreichen durch ein Haustier, etwa ein Hund oder eine Katze, ermöglicht. Die Bauform ist entsprechend flach und erlaubt einen möglichst großflächigen Zugriff auf das Innere des Portionsbehälters, so dass das Haustier sich mit seiner Zunge an dem Futter bis zu dessen Neige bedienen kann.

Diese Konstruktion besitzt allerdings einige Nachteile. So entsteht bei dem Abtrennen nach dem Prinzip eines Dosenöffners zunächst ein scharfer Rand an den Behältern, an dem das Haustier sich schneiden kann. Dies gilt auch für den Deckel, der zudem aus dem Gerät heraus gefördert wird und anschließend darauf oder daneben liegt, und damit im Zugriff des Tiers. Dieses kann den Deckel zum Einen ablecken, um daran haftende Futterreste zu erlangen, diesen aber auch wegtragen und in der Wohnung liegen lassen, wo er möglicherweise erst viel später gefunden wird.

Insbesondere funktioniert die Vorrichtung aber nur mit runden Behältern, da nur diese nach dem Prinzip eines Dosenöffners mit der beschriebenen Technik geöffnet werden können. Die runde Form ist aber nur eine, mithin bei Portionsbehältern eher unübliche Form für Tierfutter. Speziell Katzenfutter wird häufig in viereckigen oder je nach Anbieter auch achteckigen Schalen aus Aluminiumfolie angeboten, deren Deckel auch kaum die erforderliche Steifigkeit besitzt, um mit dieser Vorrichtung aus dem Stand der Technik ausgefördert zu werden.

Eine weitere bekannte Vorrichtung wird in der FR 2 629 810 A1 beschrieben. Hier ist eine Reihe von Dosen vorgesehen, die einen Blechdeckel mit einer Reißlasche besitzen. Diese werden mit einem Hebelmechanismus betrieben, so dass zu einem festgelegten Zeitpunkt der jeweils nächste Behälter selbsttätig aufgezogen wird und dem Tier zur Verfügung steht. Dies hat jedoch den Nachteil, dass der Deckel auch hier absteht und eine Verletzungsgefahr darstellt, zudem bleibt der Behälter bis zur manuellen Entfernung verfügbar, mit dem Effekt, dass das Tier auch auf stehengebliebenes, altes Nassfutter zugreifen kann. Dieses kann aufgrund der offenen Lagerung jedoch bereits verdorben sein. Die Geruchsbelastung durch eine zunehmende Anzahl offener Behälter ist zudem stark.

Zahlreich bekannt sind im Stand der Technik ferner Karussellvorrichtungen, bei denen entweder mit individuellen Behältern gearbeitet wird, also zunächst ein Umfüllen des Nassfutters in die speziellen Behälter der Vorrichtung erfolgen muss, oder bei denen grundsätzlich bereits offene Behälter verwendet werden, da nur Trockenfutter bereitgestellt wird. Dies betrifft insbesondere die Schriften US 4,248,175 A, US 3,935,837 A, US 4,421,059 A und US 5,078,097 A, sowie FR 2 616 621 A1 und FR 2 584 208 A1.

Vorteilhaft bei den Karussellvorrichtungen ist insbesondere die übersichtliche Bauform und der Umstand, dass dem Tier solches Futter, das nicht bis zur nächsten Ausgabe konsumiert worden ist, wieder entzogen wird. Problematisch ist jedoch, dass hierzu zunächst entweder ein Umfüllen in andere Behälter und eine offene Lagerung innerhalb des Karussells erforderlich ist, oder aber der Behälter mit scharfkantigem Rand und ausgeworfenem Deckel bereitgestellt wird.

Vor diesem Hintergrund liegt der vorliegenden Erfindung die Aufgabe zugrunde, eine Vorrichtung zur selbsttätigen Bereitstellung von Nassfutter für Haustiere vorzuschlagen, welche den Einsatz ungeöffneter Portionsbehälter erlaubt, jedoch das Entstehen zugänglicher scharfer Kanten vermeidet und einen abgetrennten Deckel dem Zugriff des Haustiers entzieht.

Dies gelingt durch eine Vorrichtung zur selbsttätigen Bereitstellung von Nassfutter für Haustiere gemäß den Merkmalen des unabhängigen Anspruchs 1, sowie dem nebengeordneten Anspruch 14. Sinnvolle Weiterbildungen solcher Vorrichtungen können den sich jeweils anschließenden abhängigen Ansprüchen entnommen werden.

Erfindungsgemäß ist es vorgesehen, eine oder mehrere Aufnahmen vorzusehen, welche jeweils einen verschlossenen Portionsbehälter mit Nassfutter tragen können. Grundsätzlich umfasst die Erfindung die Verwendung von Portionsbehältern mit jeglicher Form von Tiernahrung, jedoch wird im Weiteren vereinfachend davon ausgegangen, dass im Wesentlichen Nassfutter in verschlossenen Portionsbehältern angeboten wird. Aufgrund einer vorgegebenen oder einstellbaren Zeitfunktion, die im Rahmen der vorliegenden Erfindung als gegeben angesehen wird, betätigt eine hier nicht näher beschriebene und für die Funktion der Erfindung unwesentliche Steuereinheit die Vorrichtung zu gegebenen Zeiten so, dass jeweils ein Portionsbehälter geöffnet bereitgestellt wird.

Zunächst einmal unterscheidet die Erfindung zwischen zwei alternativen Ausführungen, bei denen zum einen der Deckel des Portionsbehälters abgezogen wird, in einem Bewegungsablauf, wie dieser auch manuell entsprechend von einem Menschen vorgenommen würde, zum anderen der Deckel aufgetrennt und nur ein Deckelteil entfernt wird, was aber ausreichend ist um den Portionsbehälter bereitzustellen.

Zunächst wird im Folgenden die erste Alternative betrachtet, gemäß derer der Deckel des Portionsbehälters abgezogen wird. Hierzu sieht die Erfindung Mittel zur selbsttätigen Öffnung des Portionsbehälters vor, die als Greifelement ausgestaltet sind. Es handelt sich hierbei um zwei gegeneinander relativbewegliche Klemmbacken, welche sich zum Greifen einer Reißlasche eignen, wie diese an marktüblichen Portionsbehältern angeformt sind. Das Greifelement ist auf einem Schlitten angeordnet, welcher den zu öffnenden Portionsbehälter vollständig überqueren kann, indem er auf einer Schienenanordnung verfahrbar ist.

Zunächst befindet sich in diesem Zusammenhang als Ausgangspunkt ein Portionsbehälter im Eingriff des Greifelements. Die Klemmbacken des Greifelements sind zunächst geöffnet und nähern sich der Reißlasche dergestalt, dass die Reißlasche während der Annäherung des Greifelements zwischen die beiden Klemmbacken gerät. Im Zuge der weiteren Annäherung schließen sich die Klemmbacken indem sie sich bis zur Kontaktierung aufeinander zu bewegen und klemmen die Reißlasche zwischen sich ein. Mit derart gegeneinander gepressten Klemmbacken überquert nunmehr der Schlitten den Portionsbehälter und zieht den Deckel hinter sich von dem Portionsbehälter ab. Die geöffnete Schale des Portionsbehälters kann anschließend von dem Haustier zugegriffen werden.

In konkreter Ausgestaltung des Greifelements kann eine erste Klemmbacke mit dem Schlitten drehfest verbunden sein und in diesem Zusammenhang ein Widerlager ausbilden. Eine Höhenverschiebung oder Längsverschiebung an dem Schlitten ist jedoch auch für die erste Klemmbacke dennoch möglich. Gegen diese erste, drehfeste Klemmbacke kann dann die zweite Klemmbacke beweglich, insbesondere schwenkbar, gelagert sein, indem sie um eine Achse herum angelenkt ist und mithilfe wenigstens eines Betätigungselements zwischen einer Verschlusslage und einer Offenlage, vorzugsweise mittels eines Betätigungselements in Richtung einer Verschlusslage und mithilfe von Rückstellmitteln, insbesondere einer Zugfeder oder einer Druckfeder, in Richtung einer Offenlage bewegt wird.

Zudem kann es sinnvoll sein, wenn das Greifelement als Ganzes an dem Schlitten höhenverschieblich gelagert ist. Durch einen überlagerten Hub während der Überquerung des Portionsbehälters kann sichergestellt werden, dass der abgezogene Deckel keine anderen Teile des Schlittens touchiert und damit eventuell an der Innenseite des Deckels anhaftende Nassfutterreste an diesen Teilen haften bleiben.

Die Steuerung der jeweiligen Lage des Greifelements sowie dessen Offen- oder Verschlussstellung können bedarfsweise mithilfe einer Kulissensteuerung beeinflusst werden, so dass eine rein positionsabhängige Betätigung und Bewegung des Greifelements erfolgen kann. Dies hat den Vorteil, dass ein geringerer Aufwand zur Positionsermittlung des Schlittens und des Greifelements erforderlich sind, um dennoch eine geeignete Ansteuerung zu gewährleisten.

Insoweit ist es möglich, den bereits angesprochenen Exzenter als mögliches Betätigungsmittel für das Greifelement motorisch zu betätigen. Bei dem Exzenter handelt es sich im Wesentlichen um ein Element, dessen Drehachse außermittig angeordnet ist, so dass seine Außenkontur je nach Drehstellung ein angrenzendes Bauelement, wie hier die zweite Klemmbacke des Greifelements, unterschiedlich weit auslenken kann. Durch eine Drehung des Exzenters, insbesondere wenn dieser bevorzugtermaßen eine kreisrunde oder elliptische Außenkontur aufweist, kann also ein kontinuierlich zunehmender und nach einem Maximum wieder abnehmender Auslenkungsgrad erreicht werden.

Vorteilhaft ist der Exzenter zudem so platziert, dass das Greifelement genau in dem Punkt vollständig geschlossen ist, in dem der Exzenter seinen Scheitelpunkt erreicht, so dass der Exzenter sich vollständig um seine Exzenterachse drehen kann. Dies kann besonders dann von Interesse sein, wenn der Exzenter mit einem Zahnrad wirkverbunden ist, welches mit einer in Bewegungsrichtung des Schlittens zusammenwirkt. Eine solche Zahnstange kann je nach gewünschtem Bewegungsablauf durchgehend oder nur abschnittsweise gezahnt sein und auf diese Weise ebenfalls eine Positionssteuerung ermöglichen.

Dem Schlitten kann ferner ein in Bewegungsrichtung vorlaufendes erstes Rollenelement zugeordnet sein. Dieses erreicht den Portionsbehälter noch vor dem Greifelement und drückt diesen in die Aufnahme hinein, so dass das Greifelement im Zuge des Abziehens des Deckels den Portionsbehälter nicht anhebt, wodurch sich der Deckel nicht weiter lösen würde.

Ein zweites Rollenelement kann zudem als nachlaufendes Rollenelement vorgesehen sein, um den Portionsbehälter auch nachlaufend niederzuhalten, so dass der Portionsbehälter stets in einer definierten Position verbleibt.

Alternativ zu einem zweiten, nachlaufenden Rollenelement kann jedoch um den Portionsbehälter herum auch eine beiderseitige Anordnung von lösbaren Klemmelementen vorgesehen sein, welche den Portionsbehälter niederhalten, während der Deckel abgezogen wird. Hierdurch kann zumindest auf das nachlaufende, zweite Rollenelement verzichtet werden.

Derartige Klemmelemente können insbesondere als längliche Klemmlaschen ausgestaltet sein, welche an einem Ende drehbar neben der Aufnahme für den Portionsbehälter befestigt sind, während sie am anderen Ende in einer Kulissenführung aufgenommen sind und sich darin zwischen einer Freigabeposition und einer Klemmposition im Wesentlichen auf die Aufnahme zu und von dieser weg bewegen können.

Selbstverständlich können die Klemmlaschen direkt bei einem Befüllvorgang der Vorrichtung manuell in die Klemmposition versetzt werden. Allerdings kann auch der Schlitten Abweiserelemente aufweisen, welche bei einer Überquerung des Portionsbehälters durch den Schlitten die Klemmlaschen entlang ihrer Kulissenführung in ihre Klemmposition drücken. Dazu können die Klemmlaschen mithilfe je eines in der Kulisse geführten Knebels betätigt werden, der gegen das jeweilige Abweiserelement stößt und davon in die Klemmposition geschoben wird. Mit besonderem Vorteil kann sich eine solche Anordnung aus Abweiserelementen auf einer Vorderseite und einer Rückseite des Schlittens befinden, so dass der Schlitten die Klemmlaschen während einer Vorwärts- und auch während einer Rückwärtsbewegung betätigen kann. Auf diese Weise kann sichergestellt werden, dass die Klemmelemente bezüglich des Schlittens in einer definierten Position liegen. Ergänzend können die Klemmlaschen mithilfe von Federelementen in die Freigabeposition zurückversetzt werden, so dass der Benutzer stets eine geöffnete Aufnahme vorfindet und nur den Portionsbehälter in diese einlegen muss.

Ziel der Überquerung des Portionsbehälters durch den Schlitten ist mit besonderem Vorteil ein Abfallbehälter, welcher ebenfalls im Bereich der Schienenanordnung angeordnet ist. Ein von dem Greifelement abgezogener Deckel eines Portionsbehälters kann beim Erreichen des Abfallbehälters losgelassen und in diesem abgelegt werden.

Im Folgenden wird nunmehr auch auf die zweite Alternative eingegangen, bei welcher die Öffnung des anstehenden Portionsbehälters entweder mit einer Laserschneidvorrichtung oder mit einem Stanzmesser erfolgt, welches letzteres in einer geschlossen umlaufenden, also endlosen Form die gewünschte Kontur des abzutrennenden Deckels abbildet. Hiervon soll im weiteren hauptsächlich die Letztere dieser beiden Lösungen näher betrachtet werden.

Der Portionsbehälter wird, mit Mitteln zur Entnahme des abgetrennten Deckels, im Weiteren als Deckelteil bezeichnet, von dem Deckel befreit. Abschließend wird der geöffnete und abgedeckte Portionsbehälter dem Haustier bereitgestellt.

Durch das Öffnen des Portionsbehälters mithilfe eines Stanzmessers wird dafür gesorgt, dass am Rand des Portionsbehälters nicht die von Dosenöffnern bekannten scharfen Ränder entstehen, vielmehr werden diese beim Stanzen allenfalls leicht herabgebogen und damit von dem Tier ferngehalten. Durch das separate Abdecken des Portionsbehälters behält die Vorrichtung jedoch insbesondere die Kontrolle über den Verbleib des Deckelteils, so dass dieses nicht unkontrolliert greifbar verbleibt und dem Tier überlassen wird. Auch sieht die Erfindung im Fall mehrerer Aufnahmen für jeden Portionsbehälter eine eigene Klinge vor, so dass auch beim Öffnen des Portionsbehälters stets mit einer frischen und hygienisch einwandfreien Klinge gearbeitet werden kann.

An der Aufnahme, oder im Fall mehrerer Aufnahmen gegebenenfalls zentral an einer Öffnungsposition befindet sich eine Stanzpresse, mit deren Hilfe der Deckel von dem Portionsbehälter gelöst wird. Diese Stanzpresse kann das Stanzmesser direkt enthalten. Die Erfindung sieht aber auch eine weitere, vorteilhaftere Lösung vor, bei welcher jeder Aufnahme ein eigenes Aufsetzteil lösbar zugeordnet ist. Dieses Aufsetzteil wird nach dem Platzieren eines Portionsbehälters in einer Aufnahme auf den Rand der Aufnahme aufgesetzt und umfasst einen Federrahmen, an welchem das Stanzmesser federnd gelagert ist. Die Portionsbehälter können dadurch immer mit einem frischen Stanzmesser geöffnet werden, während die Stanzpresse nur ein Druckelement benötigt, welches die an den Aufsetzteilen gelagerten Stanzmesser betätigt. Durch eine solche Betätigung wird das Stanzmesser aus einer Ruheposition in eine Öffnungsposition verbracht, in welcher es den Deckel des Portionsbehälters durchgreift und das Deckelteil abschert. Dadurch, dass ein Stanzmesser für jede Aufnahme vorgesehen ist, ist auch sichergestellt, dass das Deckelteil nicht mit der Stanzpresse angehoben wird und damit unkontrolliert an dem Stanzmesser haften bleibt.

Zur weiteren Absicherung der entstehenden Schnittkante und um auch das Stanzmesser selbst aus dem Zugriff des Haustiers fernzuhalten, kann dem Aufsetzteil eine inwendig umlaufende Blende zugeordnet sein, welche die Klinge des Stanzmessers in der Ruheposition vollständig verdeckt, jedoch in einer Öffnungsposition zumindest teilweise freigibt. So wird durch das Druckelement der Stanzpresse das Stanzmesser hinter der Blende hervorgerückt und verschwindet anschließend wieder dahinter außer Zugriff des Haustiers.

Im Einzelnen kann die Klinge des Stanzmessers aus voneinander beabstandeten Spitzen bestehen, welche über die umlaufende Klinge des Stanzmessers verteilt sind und als Erstes in den Portionsbehälter eindringen. In den Zwischenräumen dieser Spitzen können dann konkave Klingenabschnitte vorgesehen sein, welche beim weiteren Eindringen den Deckel des Portionsbehälters sauber und sicher abtrennen. Sie kann bevorzugtermaßen aus Kunststoff, Edelstahl oder Keramik bestehen, ohne dass eine Beschränkung auf diese Materialien bestünde.

Die an der Öffnungsposition zur Betätigung des Stanzmessers vorgesehene Stanzpresse ist vorzugsweise dazu hergerichtet, das Stanzmesser des jeweiligen Aufsetzteils zu betätigen. Dabei wird das Stanzmesser gegen eine Federkraft mit einem Stützrahmen gegen den Federrahmen des Aufsetzteils gedrückt und dadurch nach unten auf den Portionsbehälter zu ausgerückt.

Die hierfür erforderliche Kraft kann aus unterschiedlichen Quellen stammen. Besonders bevorzugt ist die Verwendung eines elektrisch angetriebenen Spindelelements, eines Hubmagneten oder eines Kolbens, der hydraulisch oder pneumatisch betätigt werden kann. Das Druckelement der Stanzpresse kann mit einigem Vorteil rund oder kreuzförmig ausgebildet sein, aber auch in Abhängigkeit von den verschiedenen denkbaren Formen der Portionsbehälter sinnvoll an diese angepasst werden.

Neben der Öffnungsposition ist an einer an sich beliebigen anderen Stelle der Vorrichtung, bedarfsweise auch an gleicher Stelle, eine Abdeckposition vorgesehen, an welcher das nach dem Stanzen auf dem Portionsbehälter liegende Deckelteil entfernt wird. Dort kann vorzugsweise ein Greifelement, Saugelement oder ein Magnet vorgesehen sein, mit dem das Deckelteil kontrolliert erfasst und angehoben werden kann.

Auch kann ein Abfallbehälter vorgesehen sein, in welchen die Deckelteile von der Vorrichtung abgelegt werden können. In diesem Fall müssen die Mittel zur Entnahme so gestaltet sein, dass diese sich über den Abfallbehälter bewegen können. Alternativ kann auch eine der Aufnahmen als Abfallbehälter vorgesehen sein oder ein Deckelteil auch auf oder in jeweils einem der bereits geleerten Portionsbehälter abgelegt werden.

Zur Ablage des Deckelteils in einem Abfallbehälter kann dieses einen, vorzugsweise elektrisch betriebenen, Überschlagarm aufweisen. Dieser ist zunächst über den geöffneten Portionsbehälter geneigt, wo die Mittel zur Entnahme das Deckelteil erfassen und richtet sich dann bis zu einem Scheitelpunkt auf, den er überstreicht und sich dann über den Abfallbehälter neigt.

Hierbei kann es sinnvoll sein, wenn der Überschlagarm als Leiterrahmen zum Durchreichen des aufgenommenen Deckelteils ausgestaltet ist. Dann können die Mittel zur Entnahme mit dem aufgenommenen Deckelteil innen durch den Leiterrahmen hindurchgereicht werden, anstatt nach außen den benötigten Bewegungsradius zu vergrößern.

Eine bevorzugte Ausgestaltung sieht vor, die Vorrichtung in ein Gehäuse einzusetzen, in dem ein Karussell vorgehalten wird. Dieses Karussell weist eine Mehrzahl von Aufnahmen auf, welche mithilfe eines Elektromotors im Kreis herum bewegt werden können. Durch Abnehmen eines oberen Gehäuseteils erhält der Benutzer Zugriff auf das Karussell, so dass er die Portionsbehälter in den Aufnahmen platzieren kann.

Um zu vermeiden, dass früher geöffnete Portionsbehälter im Sichtfeld des aufgrund der Gerätefunktion bereits bereitstehenden Haustiers unter der Entnahmeposition hindurchfahren, kann die Gehäuseöffnung optional durch eine Zugriffstür verschlossen sein, welche nach der Positionierung des soeben abgedeckten Portionsbehälters für das Haustier selbsttätig geöffnet und vor einer Weiterbewegung des Karussells wieder geschlossen wird.

Die vorstehend beschriebene Erfindung wird im Folgenden anhand eines Ausführungsbeispiels näher erläutert.

Es zeigen
- Figur 1: eine erfindungsgemäße Vorrichtung mit einem Gehäuse und einem darin aufgenommenen Produktbehälter mit Nassfutter für ein Haustier,
- Figur 2: ein in dem Gehäuse gemäß Figur 1 aufgenommenes Karussell mit mehreren Produktbehältern und einer schlittengeführten Vorrichtung zum selbsttätigen Öffnen der Produktbehälter,
- Figur 3: eine seitliche Querschnittsansicht durch die Vorrichtung gemäß Figur 1 in einer ersten Ausgestaltungsform mit zwei Rollenelementen, vor Beginn des Öffnungsvorgangs eines Produktbehälters,
- Figur 4: eine seitliche Querschnittsansicht gemäß Figur 3 während des Öffnungsvorgangs eines Produktbehälters,
- Figur 5: eine perspektivische Querschnittsansicht gemäß Figur 3 nach Abschluss des Öffnungsvorgangs eines Produktbehälters,
- Figur 6: ein in dem Gehäuse gemäß Figur 1 aufgenommenes Karussell in einer alternativen Ausgestaltung mit zusätzlichen Klemmlaschen zur Halterung der Produktbehälter in perspektivischer Darstellung,
- Figur 7: ein Detail der Figur 6 mit einem zusätzlich dargestellten Schlitten vor Beginn des Öffnungsvorgangs eines Produktbehälters in einer Draufsicht von oben,
- Figur 8: das Detail gemäß Figur 7 während des Öffnungsvorgangs eines Produktbehälters in einer Draufsicht von oben,
- Figur 9: eine seitliche Querschnittsansicht durch die Vorrichtung gemäß Figur 1 in einer zweiten Ausgestaltungsform mit einem Rollenelement und zusätzlichen Klemmlaschen beiderseits des Produktbehälters, vor Beginn des Öffnungsvorgangs desselben,
- Figur 10: eine alternative erfindungsgemäße Vorrichtung mit einem Gehäuse und einer darin geöffneten Gehäuseöffnung zum Zugriff eines Haustiers auf einen geöffneten Portionsbehälter in einer perspektivischen Darstellung,
- Figur 11: ein Karussell der Vorrichtung gemäß Figur 10 in einer perspektivischen Darstellung,
- Figur 12: ein Aufsetzteil zum Aufsetzen auf einer Aufnahme des Karussells gemäß Figur 11 in perspektivischer Darstellung,
- Figur 13: ein Stanzmesser aus einem Aufsetzteil gemäß Figur 12 in perspektivischer Darstellung,
- Figur 14: die Vorrichtung gemäß Figur 10 ohne Gehäusedeckel in perspektivischer Darstellung,
- Figur 15: eine Stanzpresse, welche über einem Aufsetzteil positioniert ist in perspektivischer Darstellung,
- Figur 16: die Stanzpresse gemäß Figur 15, welche das Aufsetzteil betätigt in perspektivischer Darstellung,
- Figur 17: ein Greifer als Mittel zur Entnahme eines abgetrennten Deckelteils von einem Portionsbehälter in perspektivischer Darstellung,
- Figur 18: der Greifer gemäß Figur 17 nach dem Entnehmen des Deckelteils in perspektivischer Darstellung,
- Figur 19: der Greifer gemäß Figur 17 nach dem Ablegen des Deckelteils in einem Abfallbehälter in perspektivischer Darstellung, sowie
- Figur 20: ein Saugelement als alternatives Mittel zur Entnahme eines abgetrennten Deckelteils nach dessen Entnahme aus einem Portionsbehälter in perspektivischer Darstellung.

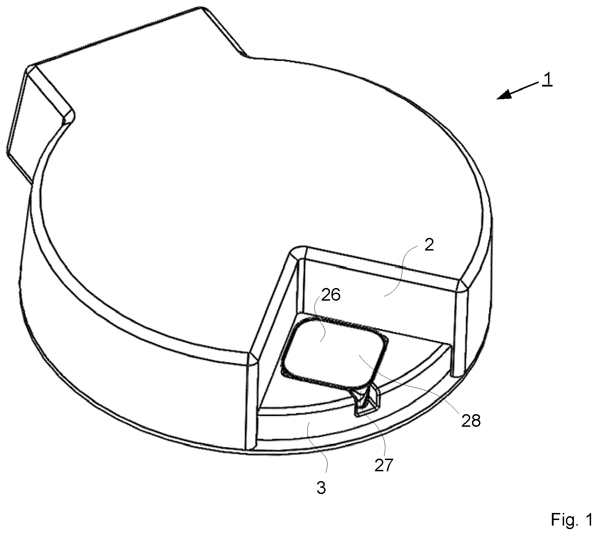

Figur 1 zeigt eine Vorrichtung zur Bereitstellung von Nassfutter für Haustiere. Dieses wird von den Herstellern in aller Regel in Portionsbehältern 26 bereitgestellt. Es versteht sich von selbst, dass Haustiere diese nicht oder allenfalls mit Glück und unzulänglich selbst öffnen können, so dass ein Haustier, sofern es unvermeidlich ist, es überhaupt für längere Zeit alleine zu lassen, mit einer Öffnungsvorrichtung für diese Portionsbehälter 26 versorgt werden muss. Eine solche Vorrichtung ist in einem Gehäuse 1 aufgenommen, in welchem ein Karussell 3 angeordnet ist. Diese Karussellanordnung ermöglicht es, ungeöffnete, gegebenenfalls geöffnete aber nicht vor einem Verfall verzehrte sowie entleerte Produktbehälter dem Zugriff des Haustiers zu entziehen. Lediglich ein aktuell für den Zugriff vorgesehener Produktbehälter 26 ist über eine Gehäuseöffnung 2 von außen zugreifbar. Ein Produktbehälter 26 ist in dem Karussell 3 stets so anzuordnen, dass eine an einem Deckel 28 des Produktbehälters 26 angeordnete Reißlasche 27 gerade und gut greifbar angeordnet wird, so dass der Produktbehälter 26 durch die Vorrichtung gut geöffnet werden kann.

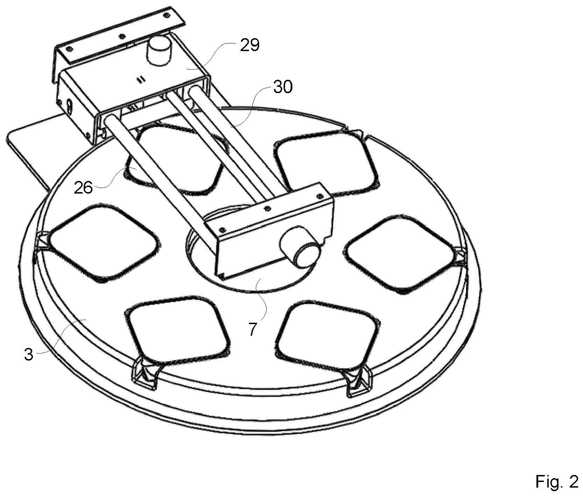

Figur 2 zeigt die gleiche Anordnung mit abgenommenem Gehäusedeckel. Es ist zu erkennen, dass in dem Bereich, welcher der Entnahmeposition gegenüberliegt, ein Schlitten 29 angeordnet ist, welcher zwischen einem dort angeordneten Portionsbehälter 26 und einem in dem Karussell 3 mittig angeordneten Abfallbehälter 7 entlang einer Schienenanordnung 30 verfahrbar ist.

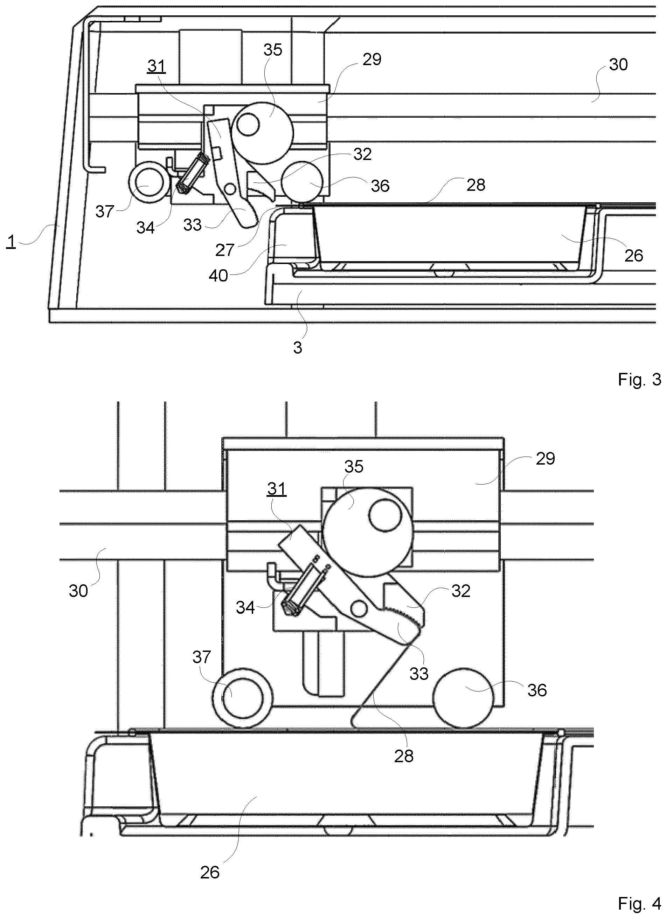

Wie in Figur 3 dargestellt, ist dem Schlitten 29 ein Greifelement 31 zugeordnet, welches im Wesentlichen aus einer drehfest angeordneten ersten Klemmbacke 32 und einer um eine Achse schwenkbaren zweiten Klemmbacke 33 besteht. Die Klemmflächen sind geriffelt, um einen sicheren Griff um die zu greifende Reißlasche 27 eines auf dem Karussell 3 aufgenommenen Portionsbehälters 26 zu erhalten. Diese Reißlasche 27 ist über einer Aussparung 40 angeordnet, welche es dem Greifelement 31 erlaubt, die Reißlasche 27 von oberhalb und von unterhalb zu greifen. An dem Schlitten 29 ist in seiner Laufrichtung zunächst ein erstes Rollenelement 36 zugeordnet, welches beim Verfahren des Schlittens 29 entlang der Schienenanordnung 30 zunächst über den noch geschlossenen Deckel 28 des Produktbehälters 26 rollt. Dem ersten Rollenelement 36 folgt das Greifelement 31 nach, wobei die beiden Klemmbacken 32 und 33 zunächst voneinander beabstandet sind. Hierzu ist ein Exzenter 35 in einer Drehposition eingestellt, welche einen geringen oder keinen Druck auf die zweite Klemmbacke 33 ausübt, so dass also der Schwerpunkt des Exzenters 35 auf der der zweiten Klemmbacke 33 gegenüberliegenden Seite der Exzenterachse liegt. Eine Druckfeder 34 als Rückstellelement hat die zweite Klemmbacke 33 vielmehr in den größtmöglichen Abstand zur ersten Klemmbacke 32 gebracht. Ein nacheilendes, zweites Rollenelement 37 folgt dem Greifelement 31 nach und wird im Folgenden den Portionsbehälter 26 ebenfalls niederhalten, um ein Anheben desselben im Zuge eines Abziehens des Deckels zu verhindern.

Dies ist wiederum in Figur 4 dargestellt. Dort hat das Greifelement 31 bereits den Deckel 28 gegriffen und ein Stück weit von dem Produktbehälter 26 abgezogen. Hierzu wurde der Exzenter 35 in eine Position bewegt, in welcher die zweite Klemmbacke 33 gegen die Kraft der Druckfeder 34 maximal an die erste Klemmbacke 32 angepresst wird, so dass die Reißlasche 27 sicher zwischen den Klemmbacken 32 und 33 gehalten ist. Gleichzeitig vollzieht das Greifelement 31 einen Hub an dem Schlitten 29, so dass der abgelöste Deckel 28 sich nicht in dem nacheilenden zweiten Rollenelement 37 verfängt und dieses verschmutzt.

Schließlich erreicht der Schlitten 29 eine innere Position über einem in dem Karussell 3 zentral gelegenen Abfallbehälter 7, wo der Exzenter 35 das Greifelement 31 in eine Offenlage verstellt, so dass die Druckfeder 34 sich wieder entlasten und die Klemmbacken 32 und 33 voneinander trennen kann. Der unterdessen abgetrennte Deckel 28 des Portionsbehälters fällt infolgedessen in den Abfallbehälter 7 herab, welcher bedarfsweise zur leichteren Reinigung entnehmbar gestaltet sein kann. Nach dem Öffnen des Produktbehälters 26 wird nun das Karussell 3 so weit verfahren, dass der geöffnete Produktbehälter 26 an eine für das Haustier zugängliche Position unter der Gehäuseöffnung 2 verfahren wird.

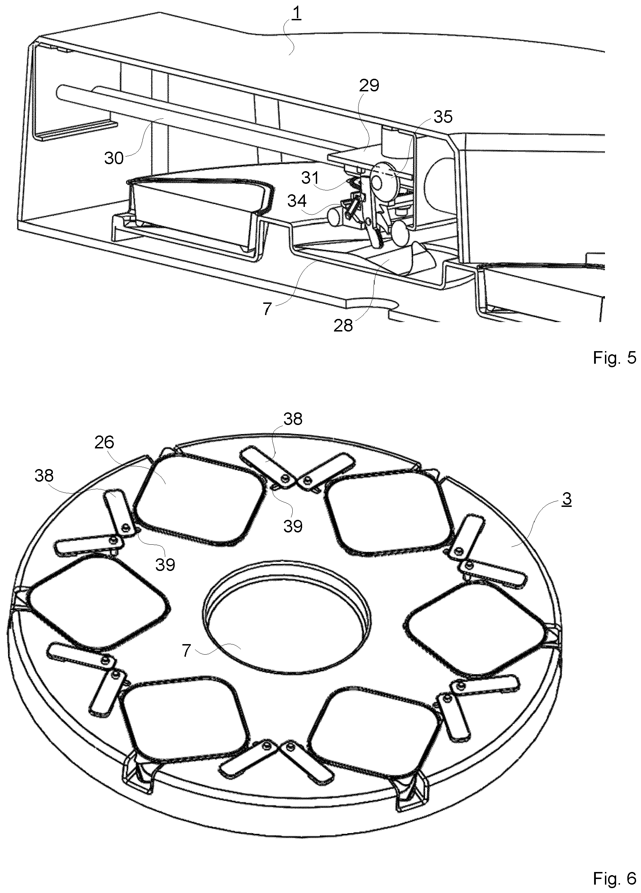

Figur 6 zeigt eine alternative Ausgestaltung, bei welcher auf ein zweites Rollenelement 37 verzichtet werden kann. Hierzu sind jedem Produktbehälter 26 zwei Klemmlaschen 38 zugeordnet, welche seitlich neben dem jeweiligen Produktbehälter 26 an dem Karussell 3 befestigt sind. Diese sind auf einer Seite drehbar gelagert, so dass sie zwischen einer Freigabeposition und einer Klemmposition verschoben werden können und in der Klemmposition den Portionsbehälter 26 festhalten.

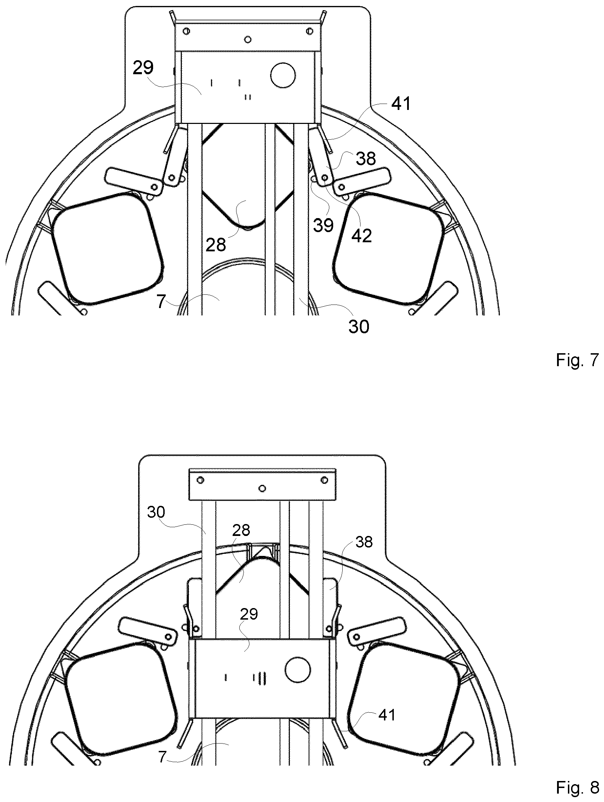

Figuren 7 und 8 zeigen die Bewegung des Schlittens 29 in dieser alternativen Ausgestaltung. Hier weist der Schlitten 29 seitliche Abweiser 41 auf, welche während der Fahrt des Schlittens 29 in Richtung des Abfallbehälters 7 die Klemmlaschen 38 in ihre Klemmposition bringen. An ihrem beweglichen Ende weisen die Klemmlaschen hierzu Knebel 42 auf, welche an ihrer freien Oberseite ein Gegenstück zu den Abweisern 41 darstellen, mit ihrer Unterseite hingegen in einer Kulissenführung 39 laufen und die Bewegung der Klemmlasche 38 begrenzen. Nach dem Passieren der Klemmlaschen 38 durch den Schlitten 29 sind die beweglichen Enden der Klemmlaschen 38 an den Produktbehälter 26 herangerückt und bedecken die Seitenkanten des Deckels 28. Der Produktbehälter ist damit während des Abziehens des Deckels 28 gegen ein Herausheben durch die Zugkraft des Greifelements 31 gesichert.

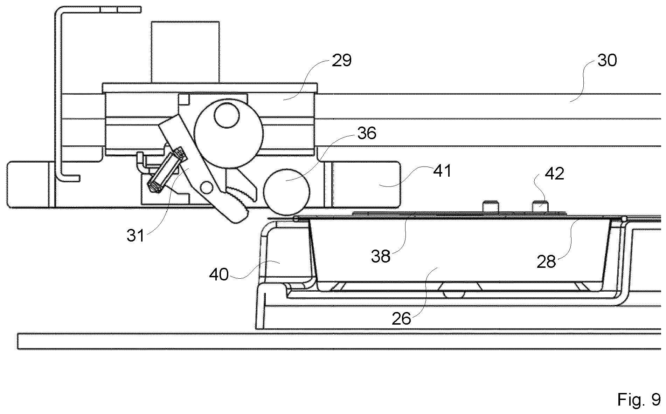

Dieser Vorgang lässt sich nochmals anhand der Figur 9 erfassen, bei dem nun zu erkennen ist, dass der Deckel 28 des Produktbehälters 26 mithilfe der Klemmlaschen 38 gehalten ist und dass auf ein nacheilendes, zweites Rollenelement 37 verzichtet wird. Zu erkennen ist auch, dass die Abweiser 41 als abgewinkelte Flächenelemente ausgestaltet sind, welche mit den hochstehenden Knebeln 42 zusammenwirken, während sie über die Klemmlaschen 38 selbst hinweggeschoben werden.

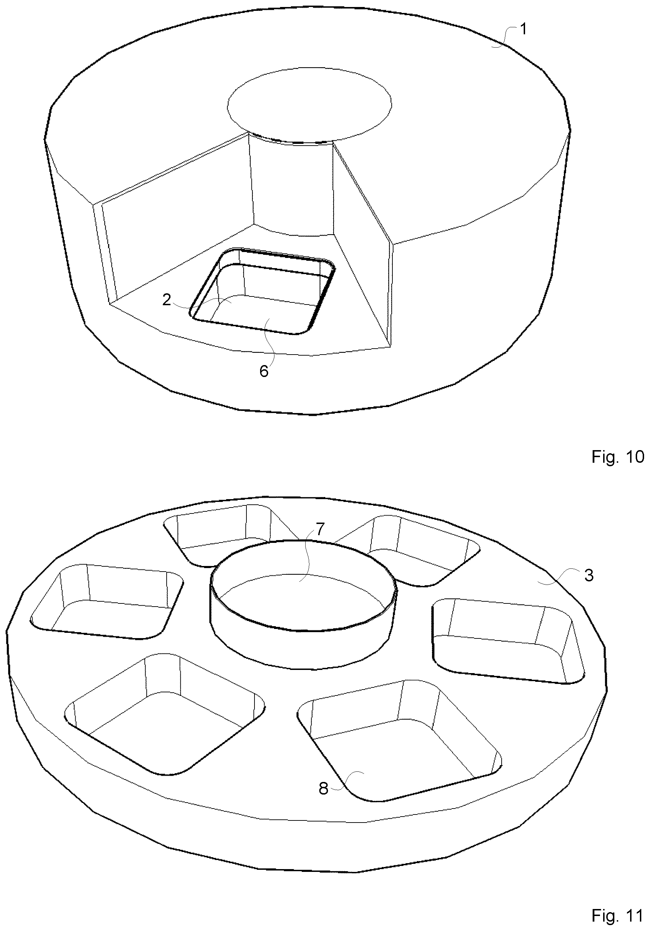

Figur 10 zeigt eine alternative Vorrichtung zur Bereitstellung von Nassfutter für Haustiere. Diese ist ebenfalls nach außen zum Schutz vor einem Zugriff durch das Haustier durch ein Gehäuse 1 abgeschirmt, welches lediglich an einer leicht zugänglichen Stelle eine Gehäuseöffnung 2 freihält, durch welche hindurch ein Portionsbehälter mit Nassfutter zugegriffen werden kann. Es werden mehrere Portionsbehälter in einem Karussell 3 gelagert, welches mehrere Drehpositionen 4, 5, 6 anfahren kann, wobei sich eine Entnahmeposition 6 unterhalb der Gehäuseöffnung 2 befindet. Bedarfsweise kann die Gehäuseöffnung 2 mit einer Türe verschließbar sein, welche sich während der Rotation des Karussells 3 vor die Gehäuseöffnung 2 schiebt und erst dann geöffnet wird, wenn ein soeben geöffneter Portionsbehälter an der Entnahmeposition 6 angekommen ist. Umgekehrt sind etwa nicht genutzte Futterreste in anderen Portionsbehältern, die sich in dem Karussell 3 an anderen Drehpositionen befinden, dem Zugriff des Haustiers entzogen, so dass nicht die Gefahr besteht, dass dieses altes, gegebenenfalls bereits verdorbenes Futter zu sich nimmt.

Die Drehung des Karussells erfolgt aufgrund eines Elektromotors, der von einer Steuereinheit angetrieben wird. Die Steuereinheit umfasst dabei auch Mittel zur Programmierung eines Programms, mit dem die Portionsbehälter zeitgesteuert zugänglich gemacht und in diesem Zuge auch wieder entzogen werden.

Figur 11 zeigt das Karussell 3, welches um eine zentrale Drehachse herum motorisch rotierbar in dem Gehäuse 1 gelagert ist. Dabei weist das Karussell 3 eine Mehrzahl von Aufnahmen 8 auf, welche entlang des Umfangs des Karussells 3 verteilt sind. Zentral im Bereich der Drehachse ist ein Abfallbehälter 7 angeordnet, in welchem von den Portionsbehältern entfernte Deckel abgelegt werden. Bei einem Austausch der leeren Portionsbehälter gegen volle kann der Abfallbehälter 7 ebenfalls mit entleert werden.

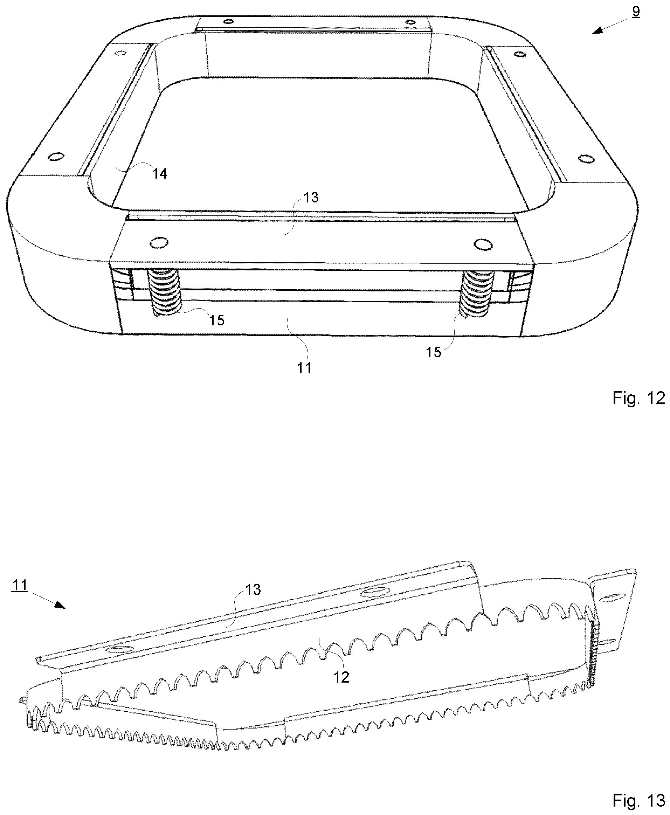

Figur 12 zeigt ein Aufsetzteil 9, welches nach einem Einsetzen eines Portionsbehälters in eine Aufnahme 8 auf diesen oder auf den Rand der Aufnahme 8 aufgesetzt wird. Die Zeichnungen gehen von einer quadratischen Form der Produktbehälter aus, welche abgerundete Ecken aufweist. Analog sind aber auch andere Formen in gleicher Weise realisierbar.

Basis des Aufsetzteils 9 ist ein Federrahmen 10, gegenüber dem ein Stanzmesser 11 mit einer angeformten Federstütze 13, wie in der nachfolgenden Figur 13 gezeigt, abgestützt wird. Zwischen der Federstütze 13 und dem Federrahmen 10 sind Federn 15 angeordnet, so dass das Stanzmesser 11 nach einer Betätigung durch Druck von oben wieder in die in Figur 12 gezeigte Ausgangslage zurückfedert. Auf der Innenseite des Stanzmessers 11 ist eine Blende 14 vorgesehen, welche die Klinge 12 des Stanzmessers 11 verdeckt, so dass eine Verletzungsgefahr seitens des Haustiers nicht besteht. Die Blende 14 dient ferner als strukturelles Element des Aufsetzteils 9 und erzeugt einen festen Rahmen, der für das Haustier ungefährlich ist. Das gesamte Aufsetzteil 9 ist leicht abnehmbar und dadurch gut zu reinigen.

Figur 13 zeigt das in dem Aufsetzteil 9 eingelegte Stanzmesser 11, welches im Wesentlichen aus einer umlaufenden, in sich geschlossenen Klinge 12 besteht, welche an den vier Außenkanten jeweils eine Federstütze 13 besitzt. Über diese wird das Stanzmesser 11 gleichmäßig nach unten gedrückt und bohrt sich zunächst mit über die Klinge 12 verteilten Spitzen in den Deckel eines Portionsbehälters, wobei zwischen den Spitzen angeordnete konkave Klingenabschnitte nach einem ersten Durchdringen des Deckelmaterials dieses abscheren, bis der Deckel als Deckelteil lose auf dem Portionsbehälter liegen bleibt.

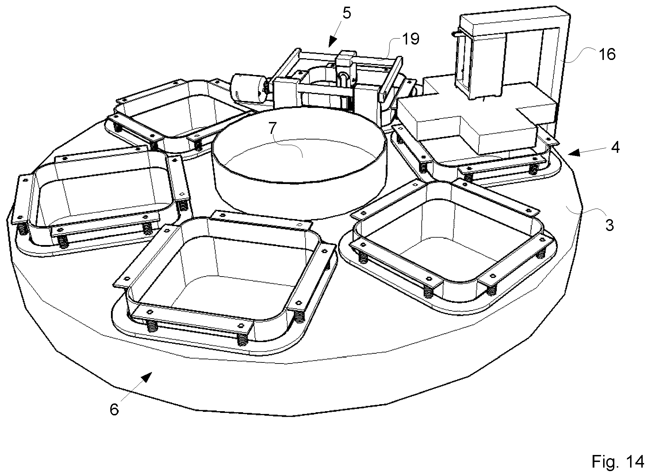

Figur 14 zeigt das vollständige Karussell 3 in einer Übersicht, wobei der soeben beschriebene Stanzvorgang an einer Öffnungsposition 4 abläuft. Dort ist in dem Gehäuse 1 eine Stanzpresse 16 ortsfest installiert, unter welcher hindurch sich das Karussell 3 drehen kann. An einer Abdeckposition 5 befindet sich eine Abdeckeinrichtung 19, welche den durch den Stanzvorgang abgetrennten Deckel des Portionsbehälters, im Weiteren als Deckelteil 25 bezeichnet, von dem Portionsbehälter abhebt und in einen zentral im Inneren des Karussells 3 stehenden Abfallbehälter 7 verbringt. Nach dem Abdecken des Portionsbehälters wird dieser in die Entnahmeposition 6 verfahren, wo das Haustier durch die Gehäuseöffnung 2 hindurch auf den Inhalt des Portionsbehälters zugreifen kann.

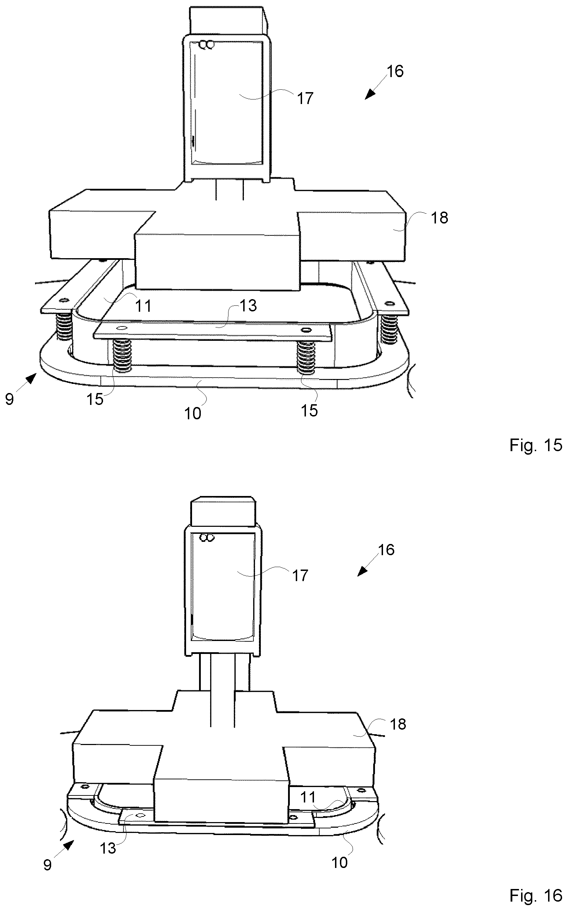

Figuren 15 und 16 zeigen den Stanzvorgang, bei welchem ein Druckelement 18, hier ein kreuzförmiger Pressstempel, mithilfe eines Spindelantriebs 17 auf die Federstütze 13 des darunter positionierten Aufsetzteils 9 drückt. Gegen die Federkraft der Federn 5 wird hierdurch das Stanzmesser 11 abwärts gedrückt. In der vereinfachten Darstellung der Figuren 6 und 7 ist auf eine inwendige Blende 14 verzichtet. Soweit eine solche wie in Figur 12 dargestellt verwendet werden soll, muss hierzu das Druckelement 18 mit endständigen Füßen ausgestattet werden, so dass die Blende 14 beim Ausüben eines Drucks auf die Federstützen 13 des Stanzmessers 11 umgangen werden kann. Die Teile der Stanzpresse 16 kommen aufgrund dieser Konstruktion nicht in Kontakt mit dem Inhalt der Portionsbehälter, so dass die erforderliche Reinigung sich auf die Aufsetzteile 9 und deren Einzelteile beschränkt.

Das eingedrückte Stanzmesser 11 drückt sich in den Deckel des Portionsbehälters, wobei die Form des Stanzmessers 11 an die Form des Portionsbehälters angepasst ist. Entlang einer Außenwand des Portionsbehälters wird daher der Deckel abgetrennt und bleibt als Deckelteil 25 auf dem noch gefüllten Portionsbehälter liegen. In dieser Lage wird das Karussell 3 dann in die Abdeckposition 5 verfahren, in welcher das Deckelteil 25 von dem Portionsbehälter entfernt wird.

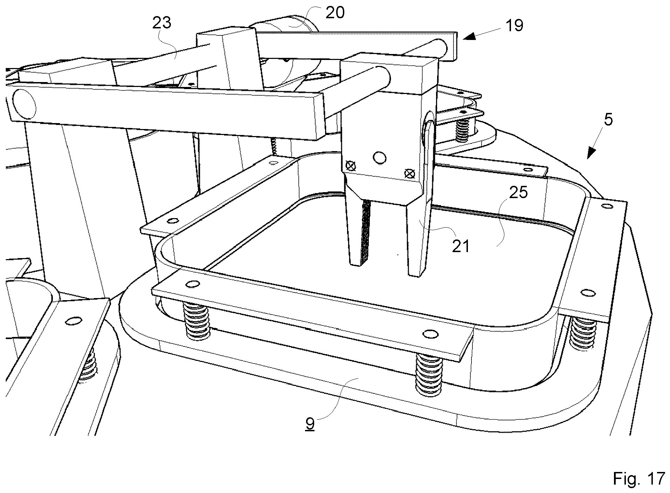

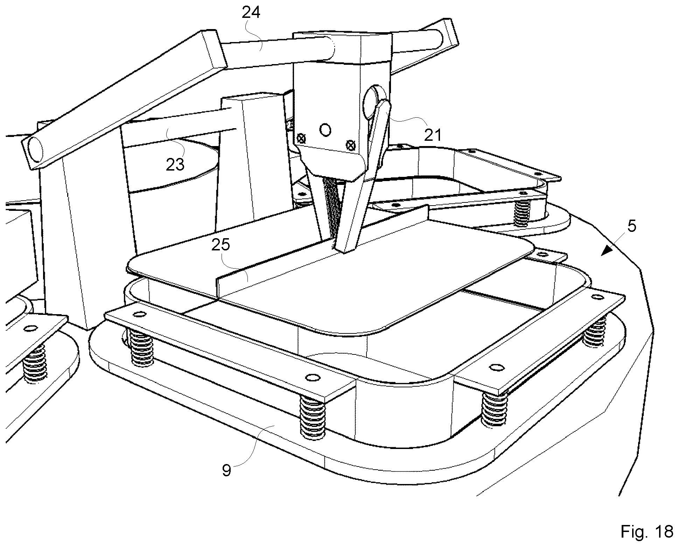

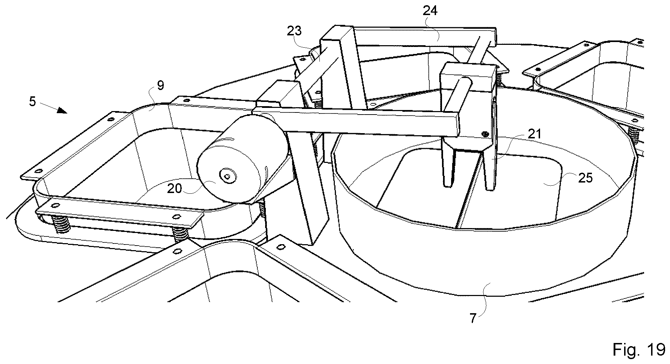

Dies ist in Figuren 17 bis 20 gezeigt, in denen sich der betrachtete Portionsbehälter mit gelöstem Deckelteil 25 an der Abdeckposition 5 befindet. Das Aufsetzteil 9 ist immer noch auf dem Rand der Aufnahme 8 aufgelegt. Um nunmehr das Deckelteil 25 von dem Produktbehälter abzuheben wird eine Abdeckeinrichtung 19 eingesetzt, welche ein an einem Überschlagarm 23 montiertes Greifelement 21 aufweist. Das Greifelement 21 senkt sich an dem freien Ende des Überschlagarms 23 bis zur Oberfläche des Stanzelements 25 ab und wird durch ein Schließen des Greifelements 21 gegriffen, wie in Figur 18 dargestellt. Anschließend wird der Überschlagarm 23 mithilfe eines Elektromotors 20 so weit gedreht, dass der Greifer 21 über dem zentral in dem Karussell 3 angeordneten Abfallbehälter 7 hängt. In dieser Position wird er geöffnet, so dass das Deckelteil 25 in den Abfallbehälter 7 hinabfällt.

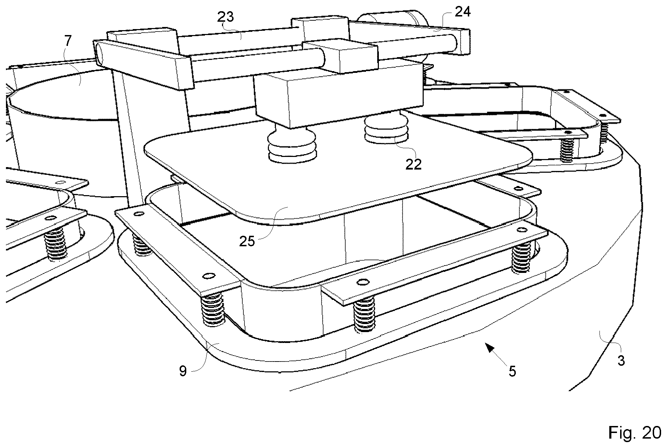

Der Überschlagarm 23 ist hierbei als Leiterrahmen 24 ausgestaltet, so dass das Greifelement 21 mit dem Deckelteil 25 während des Überschlags nicht den Überschlagsradius zusätzlich erweitert, sondern nach unten hängend gehalten werden kann. Greifelement 21 und Deckelteil 25 durchqueren den Leiterrahmen 24, so dass die Bauhöhe des Gehäuses 1 möglichst gering gehalten werden kann. Figur 20 zeigt eine weitere Lösung, bei welcher ein Saugelement 22 zum Greifen des abgetrennten Deckelteils 25 eingesetzt wird.

Vorstehend beschrieben ist somit eine Vorrichtung zur selbsttätigen Bereitstellung von Nassfutter für Haustiere, welche den Einsatz ungeöffneter Portionsbehälter, etwa in einem Karussell, erlaubt, jedoch das Entstehen zugänglicher scharfer Kanten vermeidet und einen abgetrennten Deckel dem Zugriff des Haustiers entzieht.

### BEZUGSZEICHENLISTE

- 1: Gehäuse
- 2: Gehäuseöffnung
- 3: Karussell
- 4: Öffnungsposition
- 5: Abdeckposition
- 6: Entnahmeposition
- 7: Abfallbehälter
- 8: Aufnahme
- 9: Aufsetzteil
- 10: Federrahmen
- 11: Stanzmesser
- 12: Klinge
- 13: Federstütze
- 14: Blende
- 15: Feder
- 16: Stanzpresse
- 17: Spindelantrieb
- 18: Druckelement
- 19: Abdeckeinrichtung
- 20: Elektromotor
- 21: Greifelement
- 22: Saugelement
- 23: Überschlagarm
- 24: Leiterrahmen
- 25: Deckelteil
- 26: Portionsbehälter
- 27: Reißlasche
- 28: Deckel
- 29: Schlitten
- 30: Schienenanordnung
- 31: Greifelement
- 32: erste Klemmbacke
- 33: zweite Klemmbacke
- 34: Druckfeder
- 35: Exzenter
- 36: erstes Rollenelement
- 37: zweites Rollenelement
- 38: Klemmlasche
- 39: Kulissenführung
- 40: Aussparung
- 41: Abweiser
- 42: Knebel

## Patentansprüche

1. Vorrichtung zur selbsttätigen Bereitstellung von Nassfutter für Haustiere, umfassend wenigstens eine Aufnahme (8) zur, vorzugsweise formschlüssigen, Lagerung eines Portionsbehälters (26) mit Nassfutter sowie Mitteln zur selbsttätigen Öffnung eines in der wenigstens einen Aufnahme (8) befindlichen Portionsbehälters (26),
**dadurch gekennzeichnet, dass** die Mittel zur selbsttätigen Öffnung des Portionsbehälters (26) als Greifelement (31) mit zwei gegeneinander relativbeweglichen Klemmbacken (32, 33) zum Greifen einer an einem Deckel (28) des Portionsbehälters (26) angeformten Reißlasche (27) ausgeführt sind, wobei das Greifelement (31) auf einem Schlitten (29) aufgenommen ist, welcher auf einer den zu öffnenden Portionsbehälter (26) traversierenden Schienenanordnung (30) verfahrbar ist.

2. Vorrichtung gemäß Anspruch 1, **dadurch gekennzeichnet, dass** eine erste Klemmbacke (32) des Greifelements (31) drehfest mit dem Schlitten (29) verbunden ist und eine zweite Klemmbacke (33) des Greifelements (31) um eine Achse schwenkbar ist, wobei die zweite Klemmbacke (33) mithilfe eines Betätigungselements, vorzugsweise eines Exzenters (35), in eine Verschlusslage und mithilfe von Rückstellmitteln, vorzugsweise wenigstens einer Zug- oder Druckfeder (34), in eine Offenlage beweglich ist.

3. Vorrichtung gemäß einem der Ansprüche 1 oder 2, **dadurch gekennzeichnet, dass** das Greifelement (31) an dem Schlitten (29) höhenverschieblich gelagert ist.

4. Vorrichtung gemäß Anspruch 3, **dadurch gekennzeichnet, dass** dem Greifelement (31) eine Kulisse zugeordnet ist, welche das Verfahren des Greifelements (31) bezüglich seiner Höhenlage und die Relativbewegungen der Klemmbacken (32, 33) steuert.

5. Vorrichtung gemäß einem der vorhergehenden Ansprüche, **dadurch gekennzeichnet, dass** der Exzenter (35) aufgrund eines motorischen Antriebs beweglich ist.

6. Vorrichtung gemäß einem der Ansprüche 1 bis 4, **dadurch gekennzeichnet, dass** der Exzenter (35) mit einem Zahnrad wirkverbunden ist, welches mit einer in Bewegungsrichtung des Schlittens (29) zumindest abschnittsweise gezahnten Zahnstange kämmt.

7. Vorrichtung gemäß einem der vorhergehenden Ansprüche, **dadurch gekennzeichnet, dass** dem Schlitten (29) ein in Bewegungsrichtung vorlaufendes erstes Rollenelement (36) zugeordnet ist, welches den Portionsbehälter (26) niederdrückt.

8. Vorrichtung gemäß Anspruch 7, **dadurch gekennzeichnet, dass** dem Schlitten (29) ein in Bewegungsrichtung nachlaufendes zweites Rollenelement (37) zugeordnet ist, welches den Portionsbehälter (26) niederdrückt.

9. Vorrichtung gemäß Anspruch 7, **dadurch gekennzeichnet, dass** der wenigstens einen Aufnahme (8) beiderseits lösbare Klemmelemente zum Niederhalten eines in der Aufnahme (8) aufgenommenen Portionsbehälters (26) zugeordnet sind.

10. Vorrichtung gemäß Anspruch 9, **dadurch gekennzeichnet, dass** die Klemmelemente längliche Klemmlaschen (38) sind, welche an einem Ende drehbar im Bereich der Aufnahme (8) befestigt sind und an dem anderen Ende vermittels einer Kulissenführung (39) oder eines Federelements zwischen einer Freigabeposition und einer Klemmposition verschieblich sind.

11. Vorrichtung gemäß Anspruch 10, **dadurch gekennzeichnet, dass** der Schlitten (29) Abweiserelemente aufweist, vermittels derer bei einer den Portionsbehälter (26) traversierenden Bewegung des Schlittens (29) die Klemmlaschen entlang ihrer Kulissenführung (39) von ihrer Freigabeposition in ihre Klemmposition verschiebbar sind.

12. Vorrichtung gemäß einem der vorhergehenden Ansprüche, **dadurch gekennzeichnet, dass** der Schlitten (29) zwischen einem Portionsbehälter (26) und einem Abfallbehälter (7) zur Aufnahme des durch das Greifelement (31) mittels der Reißlasche (27) von dem Portionsbehälter (26) abgezogenen Deckels (28) verfahrbar ist.

13. Vorrichtung gemäß einem der vorhergehenden Ansprüche, **dadurch gekennzeichnet, dass** dem Schlitten (29) oder dem Karussell (3) optische Mittel zur Erkennung einer Greifstellung der Reißlasche (27) und/oder zur Erkennung einer Entfernung des Deckels (28) zugeordnet sind, wobei im Fehlerfall mithilfe von Signalmitteln ein Fehlersignal und/oder ein Alarmsignal ausgegeben wird.

14. Vorrichtung zur selbsttätigen Bereitstellung von Nassfutter für Haustiere, umfassend wenigstens eine Aufnahme (8) zur, vorzugsweise formschlüssigen, Lagerung eines Portionsbehälters mit Nassfutter sowie Mitteln zur selbsttätigen Öffnung eines in der wenigstens einen Aufnahme (8) befindlichen Portionsbehälters,
**dadurch gekennzeichnet, dass** die Mittel zur selbsttätigen Öffnung des Portionsbehälters als endloses Stanzmesser (11) mit einer Klinge (12) zum Stanzen eines Deckels des Portionsbehälters ausgeführt sind und der Aufnahme (8) zusätzliche Mittel zur Entnahme eines mithilfe des Stanzmessers (11) von dem Portionsbehälter getrennten Deckelteils (25) aus dem Portionsbehälter zugeordnet sind.

15. Vorrichtung gemäß Anspruch 14, **dadurch gekennzeichnet, dass** der wenigstens einen Aufnahme (8) ein Aufsetzteil (9) lösbar zugeordnet ist, welches einen Federrahmen (10) aufweist, an welchem das Stanzmesser (11) zwischen einer Ruhelage und einer Stanzlage, vorzugsweise federnd, gelagert ist.

16. Vorrichtung gemäß Anspruch 15, **dadurch gekennzeichnet, dass** dem Federrahmen (10) eine Blende (14) zugeordnet ist, welche die Klinge (12) des Stanzmessers (11) in der Ruhelage vollständig verdeckt, jedoch in der Stanzlage zumindest teilweise freigibt.

17. Vorrichtung gemäß einem der Ansprüche 14 bis 16 **dadurch gekennzeichnet, dass** einer Öffnungsposition (4) eine Stanzpresse (16) zum Betätigen des gegen den Federrahmen (10) abgestützten Stanzmessers (11) zugeordnet ist, welcher ein über einen Spindelantrieb (17), einen Hubmagneten, ein Fallgewicht oder einen Kolben betätigtes, vorzugsweise kreuzförmig oder rund ausgebildetes, Druckelement (18) zugeordnet ist.

18. Vorrichtung gemäß einem der Ansprüche 14 bis 17, **dadurch gekennzeichnet, dass** die Mittel zur Entnahme des Deckelteils (25) aus dem Portionsbehälter in Form einer Abdeckeinrichtung (19) an einer Abdeckposition (5) zugeordnet sind.

19. Vorrichtung gemäß einem der vorhergehenden Ansprüche, weiter umfassend ein Gehäuse (1) mit einem darin aufgenommenen Karussell (3), welches die wenigstens eine Aufnahme (8) trägt und vermittels eines Elektromotors um eine Drehachse zwischen verschiedenen Drehpositionen (4, 5, 6) rotierbar ist, wobei das Gehäuse (1) an einer Entnahmeposition (6) einen Zugriff von außen durch eine Gehäuseöffnung (2) bis in das Innere eines vermittels des Karussells (3) an die Entnahmeposition (6) verbrachten Portionsbehälters ermöglicht.

## Geänderte Patentansprüche

### Geänderte Patentansprüche gemäss Regel 137(2) EPÜ.

1. Vorrichtung zur selbsttätigen Bereitstellung von Nassfutter für Haustiere, umfassend wenigstens eine Aufnahme (8) zur Lagerung eines Portionsbehälters (26) mit Nassfutter sowie Mitteln zur selbsttätigen Öffnung eines in der wenigstens einen Aufnahme (8) befindlichen Portionsbehälters (26), wobei
die Mittel zur selbsttätigen Öffnung des Portionsbehälters (26) als Greifelement (31) mit zwei gegeneinander relativbeweglichen Klemmbacken (32, 33) zum Greifen einer an einem Deckel (28) des Portionsbehälters (26) angeformten Reißlasche (27) ausgeführt sind, wobei das Greifelement (31) auf einem Schlitten (29) aufgenommen ist, welcher auf einer den zu öffnenden Portionsbehälter (26) traversierenden Schienenanordnung (30) verfahrbar ist,
**dadurch gekennzeichnet, dass** eine erste Klemmbacke (32) des Greifelements (31) drehfest mit dem Schlitten (29) verbunden ist und eine zweite Klemmbacke (33) des Greifelements (31) um eine Achse schwenkbar ist, wobei die zweite Klemmbacke (33) mithilfe eines Betätigungselements in eine Verschlusslage und mithilfe von Rückstellmitteln, vorzugsweise wenigstens einer Zug- oder Druckfeder (34), in eine Offenlage beweglich ist und dem Schlitten (29) ein in Bewegungsrichtung vorlaufendes erstes Rollenelement (36) zugeordnet ist, welches den Portionsbehälter (26) niederdrückt.

2. Vorrichtung zur selbsttätigen Bereitstellung von Nassfutter für Haustiere, umfassend wenigstens eine Aufnahme (8) zur formschlüssigen Lagerung eines Portionsbehälters (26) mit Nassfutter sowie Mitteln zur selbsttätigen Öffnung eines in der wenigstens einen Aufnahme (8) befindlichen Portionsbehälters (26), wobei
die Mittel zur selbsttätigen Öffnung des Portionsbehälters (26) als Greifelement (31) mit zwei gegeneinander relativbeweglichen Klemmbacken (32, 33) zum Greifen einer an einem Deckel (28) des Portionsbehälters (26) angeformten Reißlasche (27) ausgeführt sind, wobei das Greifelement (31) auf einem Schlitten (29) aufgenommen ist, welcher auf einer den zu öffnenden Portionsbehälter (26) traversierenden Schienenanordnung (30) verfahrbar ist, **dadurch gekennzeichnet, dass** eine erste Klemmbacke (32) des Greifelements (31) drehfest mit dem Schlitten (29) verbunden ist und eine zweite Klemmbacke (33) des Greifelements (31) um eine Achse schwenkbar ist, wobei die zweite Klemmbacke (33) mithilfe eines Betätigungselements in eine Verschlusslage und mithilfe von Rückstellmitteln, vorzugsweise wenigstens einer Zug- oder Druckfeder (34), in eine Offenlage beweglich ist.

3. Vorrichtung gemäß Anspruch 2, **dadurch gekennzeichnet, dass** dem Schlitten (29) ein in Bewegungsrichtung vorlaufendes erstes Rollenelement (36) zugeordnet ist, welches den Portionsbehälter (26) niederdrückt.

4. Vorrichtung gemäß einem der Ansprüche 1 oder 3, **dadurch gekennzeichnet, dass** dem Schlitten (29) ein in Bewegungsrichtung nachlaufendes zweites Rollenelement (37) zugeordnet ist, welches den Portionsbehälter (26) niederdrückt.

5. Vorrichtung gemäß einem der Ansprüche 1 bis 3, **dadurch gekennzeichnet, dass** der wenigstens einen Aufnahme (8) beiderseits lösbare Klemmelemente zum Niederhalten eines in der Aufnahme (8) aufgenommenen Portionsbehälters (26) zugeordnet sind.

6. Vorrichtung gemäß Anspruch 5, **dadurch gekennzeichnet, dass** die Klemmelemente längliche Klemmlaschen (38) sind, welche an einem Ende drehbar im Bereich der Aufnahme (8) befestigt sind und an dem anderen Ende vermittels einer Kulissenführung (39) oder eines Federelements zwischen einer Freigabeposition und einer Klemmposition verschieblich sind.

7. Vorrichtung gemäß Anspruch 6, **dadurch gekennzeichnet, dass** der Schlitten (29) Abweiserelemente aufweist, vermittels derer bei einer den Portionsbehälter (26) traversierenden Bewegung des Schlittens (29) die Klemmlaschen entlang ihrer Kulissenführung (39) von ihrer Freigabeposition in ihre Klemmposition verschiebbar sind.

8. Vorrichtung gemäß einem der vorhergehenden Ansprüche, **dadurch gekennzeichnet, dass** das Greifelement (31) an dem Schlitten (29) höhenverschieblich gelagert ist.

9. Vorrichtung gemäß Anspruch 8, **dadurch gekennzeichnet, dass** dem Greifelement (31) eine Kulisse zugeordnet ist, welche das Verfahren des Greifelements (31) bezüglich seiner Höhenlage und die Relativbewegungen der Klemmbacken (32, 33) steuert.

10. Vorrichtung gemäß einem der vorhergehenden Ansprüche, **dadurch gekennzeichnet, dass** der Exzenter (35) aufgrund eines motorischen Antriebs beweglich ist.

11. Vorrichtung gemäß einem der Ansprüche 1 bis 9, **dadurch gekennzeichnet, dass** der Exzenter (35) mit einem Zahnrad wirkverbunden ist, welches mit einer in Bewegungsrichtung des Schlittens (29) zumindest abschnittsweise gezahnten Zahnstange kämmt.

12. Vorrichtung gemäß einem der vorhergehenden Ansprüche, **dadurch gekennzeichnet, dass** der Schlitten (29) zwischen einem Portionsbehälter (26) und einem Abfallbehälter (7) zur Aufnahme des durch das Greifelement (31) mittels der Reißlasche (27) von dem Portionsbehälter (26) abgezogenen Deckels (28) verfahrbar ist.

13. Vorrichtung gemäß einem der vorhergehenden Ansprüche, **dadurch gekennzeichnet, dass** dem Schlitten (29) oder dem Karussell (3) optische Mittel zur Erkennung einer Greifstellung der Reißlasche (27) und/oder zur Erkennung einer Entfernung des Deckels (28) zugeordnet sind, wobei im Fehlerfall mithilfe von Signalmitteln ein Fehlersignal und/oder ein Alarmsignal ausgegeben wird.

14. Vorrichtung gemäß einem der vorhergehenden Ansprüche, weiter umfassend ein Gehäuse (1) mit einem darin aufgenommenen Karussell (3), welches die wenigstens eine Aufnahme (8) trägt und vermittels eines Elektromotors um eine Drehachse zwischen verschiedenen Drehpositionen (4, 5, 6) rotierbar ist, wobei das Gehäuse (1) an einer Entnahmeposition (6) einen Zugriff von außen durch eine Gehäuseöffnung (2) bis in das Innere eines vermittels des Karussells (3) an die Entnahmeposition (6) verbrachten Portionsbehälters ermöglicht.
